# EUROPEAN PATENT APPLICATION

(11) **EP 4 485 289 A1**
(43) Date of publication of application: **01.01.2025**
(21) Application number: 24176218.6
(22) Date of filing: 16.05.2024
(51) Int. Cl.: G06N 5/045, G06N 5/022, G06N 3/042, G06N 3/09

(54) **COMPUTER-READABLE RECORDING MEDIUM STORING INFORMATION PROCESSING PROGRAM, INFORMATION PROCESSING METHOD, AND INFORMATION PROCESSING APPARATUS**

(30) Priority: 29.06.2023 JP 2023107501
(71) Applicant: FUJITSU LIMITED, Kawasaki-shi, Kanagawa 211-8588 (JP)
(72) Inventor: SAKUMA, Yoshitomo, Kawasaki-shi, Kanagawa, 211-8588 (JP)
(74) Representative: Hoffmann Eitle

(57) **Abstract**

An information processing program causes a computer to execute a process. The computer includes a trained first machine learning model that receives, as an input, property information which indicates a probability of data and is assigned reliability information which indicates reliability of the property information, and outputs credibility of the data. The process includes: acquiring first property information that indicates a probability of predetermined data received by a recipient; generating first reliability information that indicates reliability of the first property information, based on a reliability list in which a generator reliable for the recipient among generators of the first property information is registered; and inputting, to the first machine learning model, the first property information that is assigned the first reliability information, determining credibility of the predetermined data, and presenting a result.

## Description

### FIELD

The embodiment discussed herein is related to an information processing program, an information processing method, and an information processing apparatus.

### BACKGROUND

Various kinds of information such as articles on news sites and information provided through a social networking service (SNS) are widely spread over the Internet. Such pieces of information present over the Internet may include false information that is information including incorrect content. Recently, it has been regarded as a problem that such false information causes confusion in the economy and society.

Therefore, as a countermeasure against the false information, there has been proposed a technology for confirming a probability of data over the Internet in a generic manner. In this technology, data over the Internet is assigned property information representing evaluation related to confirmation or evaluation by a third party other than a sender and a recipient of the data. The property information and the information on a provider who is the third party that provides the property information are disclosed to the recipient as a graph. This may allow the recipient to determine credibility of the data that is assigned the property information, and may increase reliability of the data. For example, in the graph, information on the sender of the data and information on the provider of the property information are each represented as a node that is an element related to the data.

As a method of using the technology using such a graph, the following technology is conceivable. For example, a machine learning model is trained by using training data including data for which true or false is known and property information. Unknown data for which true or false is not known and property information for the unknown data may be input to the trained machine learning model, and true or false of the data may be output.

As a technology related to the credibility of information, a technology for training a machine learning model by using evaluation reliabilities and evaluation tendencies of a plurality of evaluators and determining credibility of news evaluated by an evaluator has been proposed. Another technology for training a machine learning model by using a post history of a poster and determining a questionable product review post by using the trained machine learning model has been proposed. Still another technology for receiving a report, specifying a category of the report, and evaluating reliability of the report by using a machine learning model corresponding to the specified category has been proposed.

Japanese National Publication of International Patent Application No. 2020-508518, Japanese Laid-open Patent Publication No. 2022-147013, and U.S. Patent Application Publication No. 2021/0289166 are disclosed as related art.

### PROBLEMS

However, in the technology for obtaining the true or false determination result by inputting the unknown data and the property information to the machine learning model, determination is performed in a state where it is not clear how reliable the provider of each property information is. How reliable the provider of the property information depends on a recipient and a determination target.

For example, a case where the recipient wants to confirm credibility of an explanatory text "easy to understand" about a technical document of economics will be described as an example. In this case, it is considered that an expert of the economics evaluates the technical document as being easy to understand and a person who has started to study the economics evaluates the technical document as being difficult to understand. In this situation, if the recipient of the explanatory text is familiar with the economics to some extent, the recipient regards the explanatory text as true by relying on an opinion of the expert rather than on the person who has started to study the economics. By contrast, if the recipient of the explanatory text is a beginner of the economics, the recipient regards the explanatory text as false by relying on an opinion of the person who has started to study the economics rather than an expert. As described above, the reliability of the provider of the property information changes depending on an attribute of the recipient.

Therefore, in the technology for obtaining the true or false determination result by inputting the unknown data and the property information to the machine learning model, the reliability of the provider of the property information is not taken into consideration, and it is difficult to obtain a determination result of credibility appropriate for the recipient. Accordingly, it is difficult to appropriately determine the credibility of the received information.

In the technology for training the machine learning model by using the evaluation reliabilities and the evaluation tendencies of the plurality of evaluators and evaluating the credibility, evaluation of the credibility is based on the information of the general evaluators, and it is difficult to obtain the credibility of the acquired data for the recipient who has acquired the data. Even in the technology for training the machine learning model by using the post history of the poster and determining a questionable product review post or the technology for evaluating the reliability by using the machine learning model corresponding to the category of the report, the credibility of the acquired data for the recipient who has acquired the data is not taken into consideration. Thus, it is difficult to appropriately determine the credibility for the received information by using any of the technologies.

The disclosed technology has been made in view of the foregoing, and an object thereof is to provide an information processing program, an information processing method, and an information processing apparatus that allow determination of credibility for received information to be appropriately performed.

### SUMMARY

According to an aspect of the embodiments, An information processing program causes a computer to execute a process. The computer includes a trained first machine learning model that receives, as an input, property information which indicates a probability of data and is assigned reliability information which indicates reliability of the property information, and outputs credibility of the data. The process includes: acquiring first property information that indicates a probability of predetermined data received by a recipient; generating first reliability information that indicates reliability of the first property information, based on a reliability list in which a generator reliable for the recipient among generators of the first property information is registered; and inputting, to the first machine learning model, the first property information that is assigned the first reliability information, determining credibility of the predetermined data, and presenting a result.

### [Effects of Invention]

According to one aspect, the present disclosure allows determination of credibility for received information to be appropriately performed.

### BRIEF DESCRIPTION OF DRAWINGS

FIG. 1 is a system configuration diagram of an information processing system according to an embodiment;
FIG. 2 is a block diagram of an information processing apparatus according to the embodiment;
FIG. 3 is a diagram illustrating an example of graph information;
FIG. 4 is a diagram illustrating an example of a reliability list;
FIG. 5 is a diagram illustrating an example of label assignment of reliability using the reliability list;
FIG. 6 is a first diagram illustrating an example of the label assignment of the reliability using a reliability determination model;
FIG. 7 is a second diagram illustrating an example of the label assignment of the reliability using the reliability determination model;
FIG. 8 is a diagram illustrating an example of label assignment of reliability for an edge leading to determination target information;
FIG. 9 is a diagram illustrating an example of credibility determination using a credibility determination tendency model;
FIG. 10 is a diagram illustrating an example of parameter update of a credibility determination tendency model;
FIG. 11 is a diagram illustrating an overall flow of credibility determination processing according to the embodiment;
FIG. 12 is a flowchart of the credibility determination processing by the information processing apparatus according to the embodiment; and
FIG. 13 is a hardware configuration diagram of the information processing apparatus.

### DESCRIPTION OF EMBODIMENTS

Hereinafter, an embodiment of an information processing program, an information processing method, and an information processing apparatus disclosed in this application will be described in detail based on the drawings. The following embodiment is not intended to limit the information processing program, the information processing method, and the information processing apparatus disclosed in this application.

### Embodiment

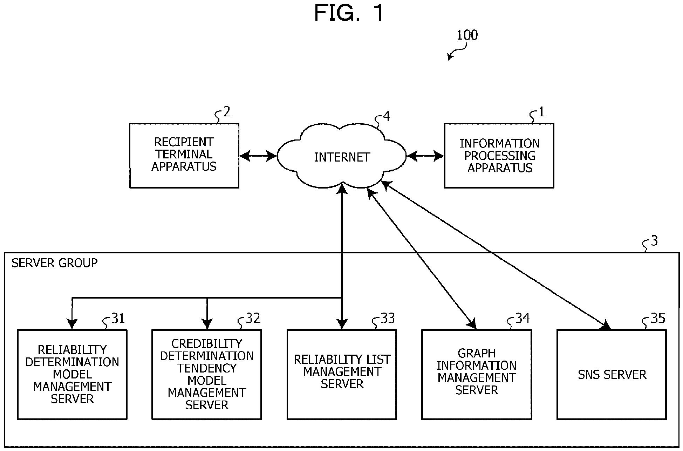

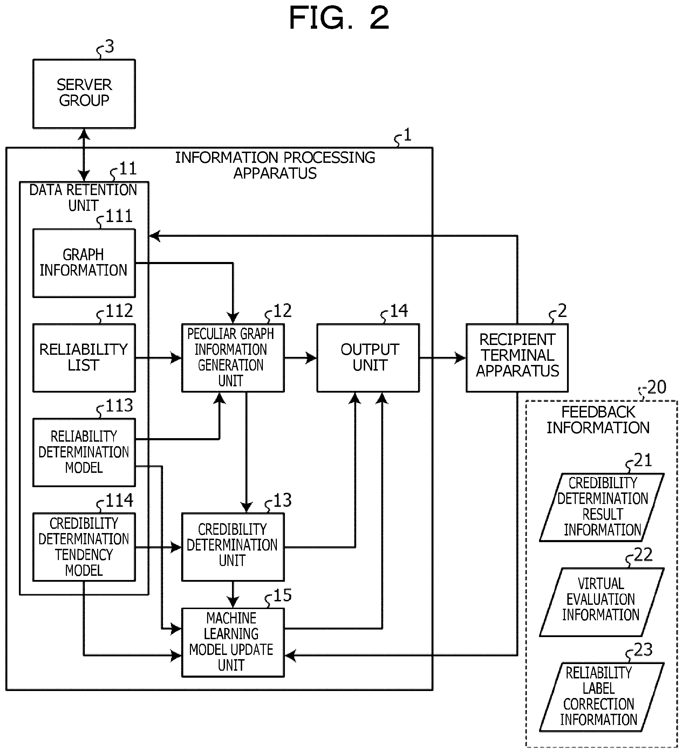

FIG. 1 is a system configuration diagram of an information processing system according to an embodiment. FIG. 2 is a block diagram of an information processing apparatus according to the embodiment. Although illustration of Internet 4 is omitted in FIG. 2 such that a flow of communication is easily understood, each apparatus actually performs communication via the Internet 4 as illustrated in FIG. 1.

An information processing system 100 includes an information processing apparatus 1, a recipient terminal apparatus 2, and a server group 3. The information processing apparatus 1, the recipient terminal apparatus 2, and the server group 3 are each coupled to the Internet 4, and may transmit and receive data to and from each other.

The server group 3 includes a reliability determination model management server 31, a credibility determination tendency model management server 32, a reliability list management server 33, a graph information management server 34, and an SNS server 35. The SNS server 35 is an apparatus that provides information that serves as a true/false determination target. A recipient determines how credible the information provided from the SNS server 35 is. For this determination, the recipient uses credibility determination processing by the information processing apparatus 1 described later. A server that provides information serving as a credibility determination target may be a server other than the SNS server 35.

The graph information management server 34 receives, from the information processing apparatus 1, input of information set by the recipient as a target for which credibility is to be determined. Hereinafter, the information set by the recipient as a target for which credibility is to be determined is referred to as "determination target information". The graph information management server 34 creates graph information 111, about the determination target information, having the determination target information as a root, by acquiring various kinds of information over the Internet 4 including the information provided from the SNS server 35. A graph hierarchized by repeated branching from one starting point is registered in the graph information 111, and the starting point of the hierarchy in the graph is referred to as the root. For example, the graph information 111 has a hierarchical structure or a tree structure having the root as the starting point. The graph information management server 34 transmits the created graph information 111 about the determination target information to the information processing apparatus 1.

The reliability determination model management server 31, the credibility determination tendency model management server 32, and the reliability list management server 33 are servers that manage pieces of information owned by the recipient. In FIG. 1, although the reliability determination model management server 31, the credibility determination tendency model management server 32, and the reliability list management server 33 are illustrated to be coupled to the Internet 4, these servers may be disposed in, for example, a local environment of the recipient. The reliability determination model management server 31, the credibility determination tendency model management server 32, and the reliability list management server 33 provide various kinds of information regarding the recipient to the information processing apparatus 1 via the Internet 4.

The recipient terminal apparatus 2 is a terminal apparatus operated by the recipient who determines the credibility for the information provided from the SNS server 35. The recipient terminal apparatus 2 notifies the information processing apparatus 1 of designation of the determination target information. Upon receiving the designation from the recipient, the recipient terminal apparatus 2 notifies the information processing apparatus 1 of designation of a reliability list 112, a reliability determination model 113, and a credibility determination tendency model 114 corresponding to the recipient. Details of the reliability list 112, the reliability determination model 113, and the credibility determination tendency model 114 will be described later.

The recipient terminal apparatus 2 receives, from the information processing apparatus 1, a determination result of the credibility of the determination target information and the graph information 111 serving as a determination material of the credibility therefor. The recipient terminal apparatus 2 provides these pieces of information to the recipient by displaying these pieces of information on a monitor or the like.

Thereafter, in a case where there is information to be fed back to the information processing apparatus 1 from the recipient for the determination result of the credibility received from the information processing apparatus 1, the recipient terminal apparatus 2 transmits designated feedback information 20 to the information processing apparatus 1. Details of the feedback information 20 will be described later.

The information processing apparatus 1 executes the credibility determination processing, corresponding to the recipient and the determination target information, on the determination target information by using the pieces of information acquired from the reliability determination model management server 31, the credibility determination tendency model management server 32, the reliability list management server 33, and the graph information management server 34. The information processing apparatus 1 generates peculiar graph information, peculiar to the recipient, to which the information serving as the determination material of the credibility for the determination target information is added. The information processing apparatus 1 transmits, to the recipient terminal apparatus 2, the determination result of the credibility of the determination target information and the peculiar graph information.

Hereinafter, the credibility determination processing by the information processing apparatus 1 will be described in detail with reference to FIG. 2. As illustrated in FIG. 2, the information processing apparatus 1 includes a data retention unit 11, a peculiar graph information generation unit 12, a credibility determination unit 13, an output unit 14, and a machine learning model update unit 15.

The data retention unit 11 receives, from the recipient terminal apparatus 2, notification of designation of the determination target information and notification of designation of the reliability list 112, the reliability determination model 113, and the credibility determination tendency model 114 corresponding to the recipient. For example, the determination target information is input to the data retention unit 11 by a drag operation using a mouse or the like on a portion set as a credibility determination target in a sentence of an SNS post displayed on the monitor of the recipient terminal apparatus 2. Information indicating to which topic, among topics determined in advance, the determination target information belongs is added to the determination target information. Information on property information for the determination target information may be added to the determination target information.

The data retention unit 11 gives, the graph information management server 34 of the server group 3, an instruction to create the graph information 111 about the determination target information. Thereafter, the data retention unit 11 receives, from the graph information management server 34, the graph information 111 of the determination target information in which a graph having a hierarchical structure having the determination target information designated by the recipient as the root is registered. The data retention unit 11 stores the received graph information 111 about the determination target information.

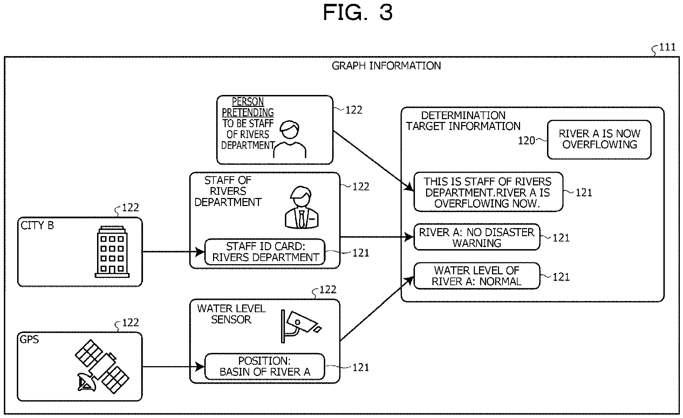

FIG. 3 is a diagram illustrating an example of the graph information. For example, the graph information 111 is information having a graph structure constituted by determination target information 120, a plurality of pieces of property information 121, and a plurality of entities 122 indicating respective generators of the pieces of property information 121. The property information 121 is data in which a property that is information on an attribute or a function of data, an individual, a corporation, a device, or the like is recorded in a tempering impossible format with a digital signature. The property information 121 may include information indicating the generator thereof.

As illustrated in FIG. 3, information represented by a hierarchical structure having, as the root, the determination target information 120 designated by the recipient is registered in the graph information 111. For example, in the graph information 111, the three pieces of property information 121 are associated with the determination target information 120 designated by the recipient. The three pieces of property information 121 are associated with the respective entities 122. For example, the entity 122 indicating staff of the rivers department is associated with the property information 121 of "River A: no disaster warning". In a case where there is property information 121 for each entity 122, they are associated with each other. An entity 122 is further associated with the property information 121 for each entity 122. For example, property information 121 "staff ID card: rivers department" is associated with the entity 122 representing the staff of the rivers department. An entity 122 representing "city B" is associated as a generator of the property information 121. As described above, the graph information 111 has a hierarchical structure in which each property information 121 and the entity 122 that is the generator of the property information 121 are linked to each other with the determination target information 120 being set as the root that is the starting point of the hierarchical structure.

By viewing the graph information 111, a user may confirm which kind of evaluation is performed on the determination target information 120 by which generator. However, the graph information 111 in this state represents generic information that is the same for everyone, and the user may simply confirm a content of the property information 121 related to the determination target information 120 and the generator thereof, but it is difficult to grasp how much each generator is reliable for the user.

Description continues while referring back to FIG. 2. The data retention unit 11 receives the reliability list 112 designated by the recipient from the reliability list management server 33 of the server group 3. The data retention unit 11 stores the received reliability list 112.

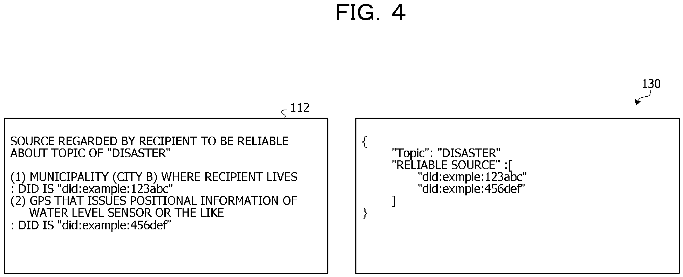

FIG. 4 is a diagram illustrating an example of the reliability list. As illustrated in FIG. 4, the reliability list 112 is created for every recipient and for every topic as a determination target. The reliability list 112 is a list of generators for which property information for a specific topic is regarded to be reliable by the recipient. A topic of the determination target information and a unique identifier of the generator regarded to be reliable by the recipient are written in the reliability list 112. For example, a decentralized identifier (DID) may be used as the unique identifier. In the present embodiment, information indicating who the generator is is added to the property information by using the same type of identifier as the identifier handled in the reliability list 112.

For example, the reliability list 112 in FIG. 4 is a list for a topic of a disaster. In the case of the reliability list 112 in FIG. 4, city B that is a municipality where the recipient lives and a Global Positioning System (GPS) that issues positional information of a water level sensor or the like are designated as the reliable generators by the recipient. For example, a syntax 130 is an example of a document of the reliability list 112 using the DID.

Description continues while referring back to FIG. 2. The data retention unit 11 receives the reliability determination model 113 designated by the recipient from the reliability determination model management server 31 of the server group 3. The data retention unit 11 stores the received reliability determination model 113.

The reliability determination model 113 is a machine learning model that determines reliability of the property information registered in the graph information 111 by using a part of the graph information 111 including a path traced from the determination target information which is the root to the property information. The part of the graph information 111 traced from the determination target information for which reliability is to be determined is referred to as "sub-graph information". For example, in FIG. 3, information including up to an entity 122 indicating the GPS traced from the determination target information 120 via an entity 122 indicating a water level sensor is an example of the sub-graph information.

For example, the reliability determination model 113 is used when, in the graph information 111, reliability of property information from a specific generator that is not explicitly indicated in the reliability list 112 is determined based on a relationship with another generator. For example, the reliability determination model 113 determines the reliability of the property information obtained from the specific generator by learning what kind of property information is issued for the specific generator from the generator determined to have high reliability by the recipient. For example, the reliability determination model 113 may use, for the machine learning, determination of the reliability of the property information made by the recipient himself or herself in the past on the same type of determination target information such as the same topic.

The reliability determination model 113 is an example of a "second machine learning model". Property information included in training data used for the machine learning of the reliability determination model 113 is an example of "second property information". For example, the reliability determination model 113 is a machine learning model that receives, as inputs, specific property information and information of a generator of the specific property information, and that outputs reliability information of the specific property information, and machine learning is performed based on a past determination result of reliability for the second property information by the recipient.

Description continues while referring back to FIG. 2. The data retention unit 11 receives the credibility determination tendency model 114 designated by the recipient from the credibility determination tendency model management server 32 of the server group 3. The data retention unit 11 stores the received credibility determination tendency model 114.

The credibility determination tendency model 114 is a machine learning model that receives input of peculiar graph information that is graph information peculiar to the recipient for the determination target information and outputs a determination result of the credibility of the determination target information. The determination result of the credibility is represented by, for example, information such as true, false, or unknown, a numerical value indicating a level of the credibility, or the like. The credibility determination tendency model 114 performs machine learning by using the determination of the credibility made by the recipient himself or herself in the past on the same topic as the determination target information. For example, Graph Neural Network (GNN) or the like that may use a graph as the input may be used for the credibility determination tendency model 114. The credibility determination tendency model 114 is an example of a "first machine learning model".

The peculiar graph information generation unit 12 acquires the graph information 111, the reliability list 112, and the reliability determination model 113 from the data retention unit 11. The peculiar graph information generation unit 12 generates peculiar graph information in which information on reliability is added to each property information in the graph information 111, by using the reliability list 112 and the reliability determination model 113. The peculiar graph information generation unit 12 outputs the generated peculiar graph information to the credibility determination unit 13 and the output unit 14. Hereinafter, details of the creation of the peculiar graph information by the peculiar graph information generation unit 12 will be described.

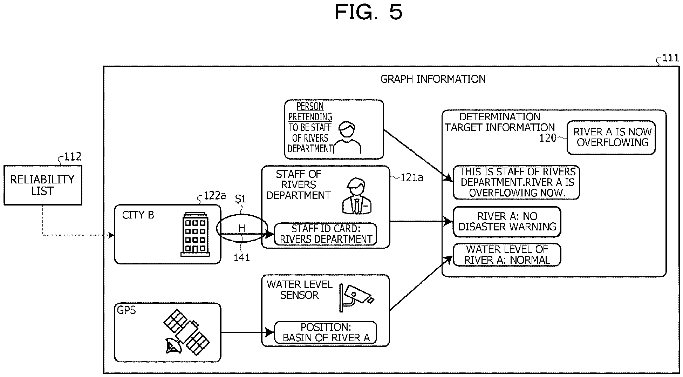

The peculiar graph information generation unit 12 assigns, in the graph information 111, a label indicating "high reliability" to the property information from the generator written in the reliability list 112. FIG. 5 is a diagram illustrating an example of the label assignment of the reliability using the reliability list.

For example, a case where city B that is a municipality where the recipient lives is registered in the reliability list 112 and a GPS that issues positional information of a water level sensor or the like as property information is not registered in the reliability list 112 is considered. As assignment of a label representing high reliability, the peculiar graph information generation unit 12 assigns "H" to an edge 141 extending from an entity 122a representing city B to property information 121a in the graph information 111 in FIG. 5 (step S1). In this case, since the GPS is not registered in the reliability list 112, the peculiar graph information generation unit 12 does not assign a label to an edge extending from the GPS to the property information in the graph information 111 in FIG. 5.

The determination target information is an example of "predetermined data". The property information for the determination target information in the graph information 111 is an example of "first property information". A label representing reliability assigned to an edge extending to the property information from the generator registered in the reliability list 112 is an example of "first reliability information". For example, the peculiar graph information generation unit 12 generates the first reliability information indicating the reliability of the first property information, based on the reliability list 112 in which the generator reliable for the recipient among the generators of the first property information is registered. The peculiar graph information generation unit 12 acquires the first property information by acquiring the graph information 111 representing a relationship among the predetermined data, the first property information, and the generator.

In the following description, in the graph information 111, a label "H" represents high reliability, and a label "L" represents low reliability. In the present embodiment, although the peculiar graph information generation unit 12 assigns the label by using the information indicating whether the reliability is high or low, a numerical value indicating the level of the reliability may be used as the label.

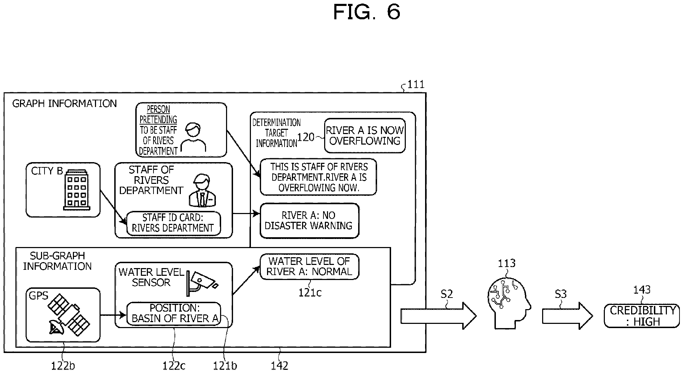

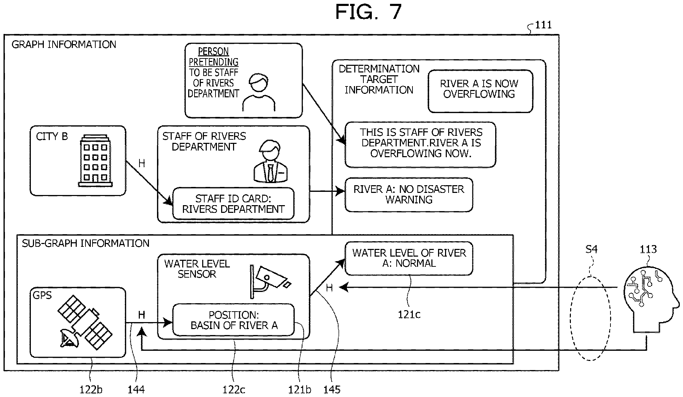

Subsequently, the peculiar graph information generation unit 12 assigns, to the property information by the generator that is not written in the reliability list 112, a label indicating the determination result of the reliability that is output by inputting, to the reliability determination model 113, the sub-graph information having, as the root, the determination target information for which the reliability is to be determined. FIG. 6 is a first diagram illustrating an example of the label assignment of the reliability using the reliability determination model. FIG. 7 is a second diagram illustrating an example of the label assignment of reliability using the reliability determination model.

From the graph information 111 illustrated in FIG. 6, the peculiar graph information generation unit 12 extracts sub-graph information 142 including up to an entity 122b of the GPS, that is not registered in the reliability list 112, traced from determination target information 120 via an entity 122c of the water level sensor. Subsequently, the peculiar graph information generation unit 12 inputs the sub-graph information 142 to the reliability determination model 113 (step S2). The peculiar graph information generation unit 12 obtains the determination result of the reliability output from the reliability determination model 113. The peculiar graph information generation unit 12 obtains an output 143 indicating that reliability of any piece of property information provided from the GPS indicated by the entity 122b and the water level sensor indicated by the entity 122c in the sub-graph information 142 is high (step S3).

As illustrated in FIG. 7, the peculiar graph information generation unit 12 assigns "H" which is a label indicating high reliability, to an edge 144 extending from the entity 122b to property information 121b. The peculiar graph information generation unit 12 assigns "H" which is a label indicating high reliability, to an edge 145 extending from the entity 122c to property information 121c (step S4).

For example, the GPS corresponds to a "generator not registered in the reliability list 112". The property information 121b provided from the GPS and the property information 121c provided from the water level sensor to which the property information 121b is assigned are an example of "the third property information and information of a generator of the third property information". The labels assigned to the edges 144 and 145 are each an example of the "first reliability information". For example, the peculiar graph information generation unit 12 inputs the third property information and the information of the generator of the third property information to the reliability determination model 113 which is the second machine learning model, and generates the first reliability information.

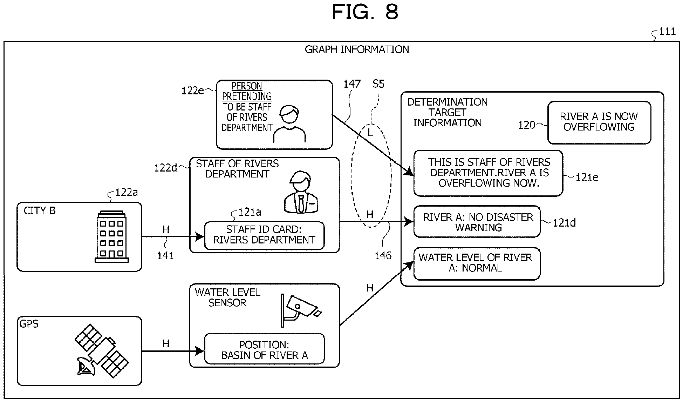

Subsequently, the peculiar graph information generation unit 12 determines labels of reliabilities for the pieces of property information indicating the generators by using the reliability determination model 113 sequentially from edges away from the determination target information of the graph information 111, and assigns labels indicating the reliabilities to the edges. The labels are assigned sequentially from the edges away from the determination target information, and thus, the peculiar graph information generation unit 12 may perform the reliability determination by also using information on the label assigned to an edge in a lower layer from a label assignment target. Reliability labels are assigned to all edges of the graph information 111, and thus, the peculiar graph information generation unit 12 generates peculiar label information. FIG. 8 is a diagram illustrating an example of the label assignment of the reliability for the edge leading to the determination target information.

For example, as illustrated in FIG. 8, the peculiar graph information generation unit 12 confirms that a label representing reliability of the edge 141 is "H". Subsequently, the peculiar graph information generation unit 12 inputs, to the reliability determination model 113, information on the label of the edge 141 and sub-graph information including entities 122d and 122a. As an output to the input, the peculiar graph information generation unit 12 acquires a determination result of reliability of property information 121d provided from the entity 122d representing the staff of the rivers department. The peculiar graph information generation unit 12 acquires "H" as a label representing the reliability of the property information 121d, and assigns "H" to an edge 146. The peculiar graph information generation unit 12 inputs, to the reliability determination model 113, sub-graph information including property information 121e, and acquires a determination result of reliability of the property information 121e provided from an entity 122e representing a person pretending to be the staff of the rivers department. In this case, since an edge extending to the entity 122e representing the person pretending to be the staff of the rivers department is not present, the peculiar graph information generation unit 12 does not input information on the label about the edge that is not present. The peculiar graph information generation unit 12 acquires "L" as a label indicating the reliability of the property information 121e provided from the entity 122e, and assigns "L" to an edge 147 (step S5).

Description continues while referring back to FIG. 2. The credibility determination unit 13 acquires the credibility determination tendency model 114 from the data retention unit 11. The credibility determination unit 13 receives input of the peculiar graph information of the recipient from the peculiar graph information generation unit 12. Subsequently, the credibility determination unit 13 inputs the peculiar graph information to the credibility determination tendency model 114, and acquires the determination result of the credibility output from the credibility determination tendency model 114. Thereafter, the credibility determination unit 13 outputs the acquired determination result of the credibility to the output unit 14. The credibility determination unit 13 outputs the determination result of the credibility of the determination target information to the machine learning model update unit 15.

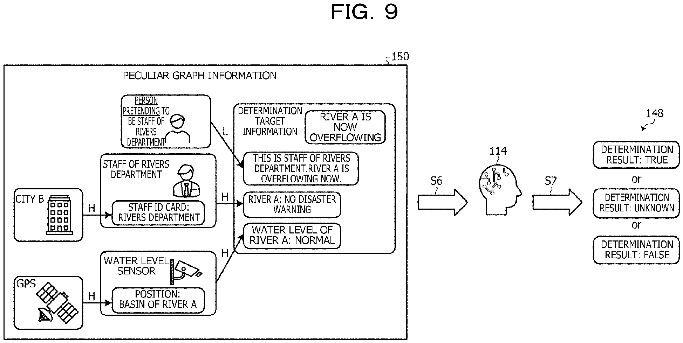

FIG. 9 is a diagram illustrating an example of the credibility determination using the credibility determination tendency model. The credibility determination unit 13 inputs peculiar graph information 150 acquired from the peculiar graph information generation unit 12 to the credibility determination tendency model 114 (step S6). The credibility determination unit 13 acquires a determination result 148 of the credibility of the determination target information input from the credibility determination tendency model 114 (step S7). For example, as illustrated in FIG. 9, the credibility determination unit 13 acquires information indicating any of "true", "unknown", or "false" as the determination result 148 of the credibility of the determination target information.

Description continues while referring back to FIG. 2. The output unit 14 receives input of the peculiar graph information of the recipient from the peculiar graph information generation unit 12. The output unit 14 receives input of the determination result of the credibility of the determination target information from the credibility determination unit 13. The output unit 14 transmits the peculiar graph information of the recipient and the determination result of the credibility of the determination target information to the recipient terminal apparatus 2, and provides the peculiar graph information and the determination result to the recipient.

The recipient confirms the provided peculiar graph information and determination result of the credibility of the determination target information by using the recipient terminal apparatus 2, and determines the credibility of the determination target. Thereafter, by using the recipient terminal apparatus 2 or the like, the recipient generates credibility determination result information 21 indicating the determination result of the credibility finally obtained for the determination target. By using the recipient terminal apparatus 2 or the like, the recipient generates virtual evaluation information 22 which is a proposal for property information that is not currently added to the acquired peculiar graph information but with which the recipient determines that the credibility of the determination target is high if it is added to the peculiar graph information. In a case where there is a label of which the value is to be corrected among the labels of the reliabilities assigned to the acquired peculiar graph information, the recipient generates reliability label correction information 23 indicating the label and the corrected value. The recipient terminal apparatus 2 transmits, to the information processing apparatus 1, the credibility determination result information 21, the virtual evaluation information 22, and the reliability label correction information 23, as the feedback information 20.

The output unit 14 receives, from the machine learning model update unit 15, a request to transmit the updated reliability determination model 113 and the updated credibility determination tendency model 114. The output unit 14 transmits, to the recipient terminal apparatus 2, the updated reliability determination model 113 and the updated credibility determination tendency model 114.

The machine learning model update unit 15 receives, from the recipient terminal apparatus 2, the feedback information 20 including the credibility determination result information 21, the virtual evaluation information 22, and the reliability label correction information 23. The machine learning model update unit 15 receives, from the credibility determination unit 13, input of the determination result of the credibility for the determination target information. The machine learning model update unit 15 updates parameters of the reliability determination model 113 to reduce an error between the output of the reliability determination model 113 and the determination of the recipient by using the correction information of the label designated in the reliability label correction information 23.

The machine learning model update unit 15 compares the determination result of the credibility registered in the credibility determination result information 21 with the credibility of the determination target information determined by the credibility determination tendency model 114, and updates parameters of the credibility determination tendency model 114 by using the virtual evaluation information 22. In this case, the machine learning model update unit 15 updates the parameters of the credibility determination tendency model 114 to reduce an error between the output of the credibility determination tendency model 114 and the determination of the recipient.

For example, a case where the reliability determination model 113 and the credibility determination tendency model 114 are modeled as a neural network such as a GNN will be described as an example. In this case, the machine learning model update unit 15 may update the parameters by using a method based on an error between an output of the neural network and the determination of the recipient that is a ground truth label, such as stochastic gradient descent (SGD) or Adam.

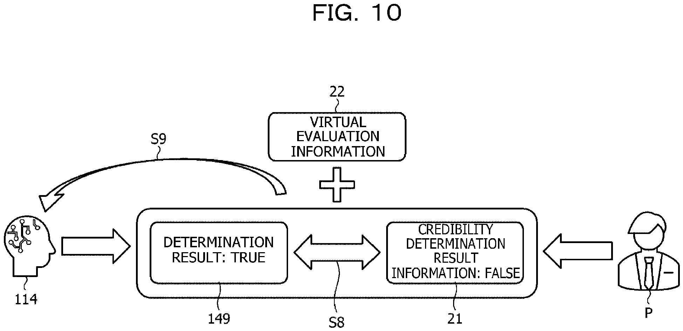

FIG. 10 is a diagram illustrating an example of the parameter update of the credibility determination tendency model. The machine learning model update unit 15 acquires a determination result 149 indicating that the credibility output from the credibility determination tendency model 114 is "true". The machine learning model update unit 15 acquires the credibility determination result information 21 in which the credibility is determined to be "false" by a recipient P. Subsequently, the machine learning model update unit 15 compares the determination result 149 and the credibility determination result information 21 with each other (step S8). The machine learning model update unit 15 updates the parameters of the credibility determination tendency model 114 by using the comparison result and the virtual evaluation information 22 (step S9).

In the present embodiment, the parameters of the credibility determination tendency model 114 are updated by using the virtual evaluation information 22 fed back from the recipient, and thus, it is possible to increase the reliability of the credibility determination by the information processing apparatus 1. Note that the virtual evaluation information 22 is an example of data for increasing the reliability of the credibility determination fed back from the recipient, and another data may be used as long as the other data may contribute to the increase in the reliability of the credibility determination. Even though special data for increasing the reliability of the credibility determination such as the virtual evaluation information 22 is not used, the machine learning model update unit 15 may update the parameters of the credibility determination tendency model 114 based on the credibility determination result information 21. This virtual evaluation information 22 is an example of "virtual property information".

Thereafter, the machine learning model update unit 15 outputs, to the output unit 14, the updated reliability determination model 113 and the updated credibility determination tendency model 114, and requests the output unit 14 to transmit, to the recipient terminal apparatus 2, the updated reliability determination model 113 and the updated credibility determination tendency model 114. By using the recipient terminal apparatus 2, the recipient transmits, to the reliability determination model management server 31, the transmitted updated reliability determination model 113 and causes the reliability determination model management server 31 to update the reliability determination model 113 retained therein. Similarly, by using the recipient terminal apparatus 2, the recipient transmits, to the credibility determination tendency model management server 32, the transmitted updated credibility determination tendency model 114, and causes the credibility determination tendency model management server 32 to update the credibility determination tendency model 114 retained therein.

In the present embodiment, although the recipient updates the reliability determination model 113 and the credibility determination tendency model 114 respectively retained in the reliability determination model management server 31 and the credibility determination tendency model management server 32, this update may be performed by the machine learning model update unit 15.

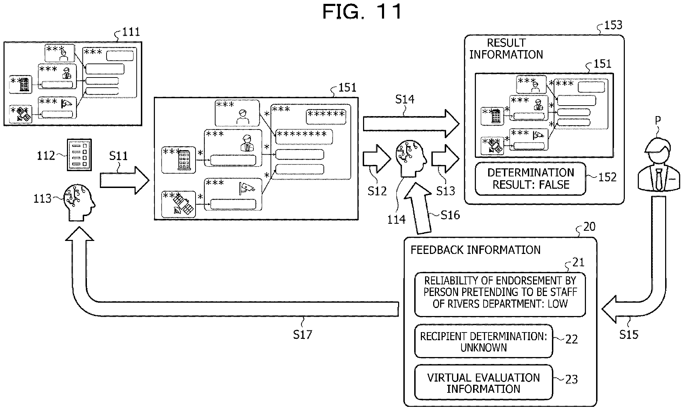

FIG. 11 is a diagram illustrating an overall flow of the credibility determination processing according to the embodiment. Next, an overview of the credibility determination processing by the information processing apparatus 1 will be described again with reference to FIG. 11.

To determine the credibility of the determination target information obtained from the SNS server 35, the recipient inputs, to the information processing apparatus 1, the designation of the determination target information, the reliability list 112, the reliability determination model 113, and the credibility determination tendency model 114 by using the recipient terminal apparatus 2. The data retention unit 11 receives the reliability list 112 designated by the recipient from the reliability list management server 33 and stores the reliability list 112. The data retention unit 11 acquires the reliability determination model 113 designated by the recipient from the reliability determination model management server 31 and stores the reliability determination model 113. The data retention unit 11 acquires the credibility determination tendency model 114 designated by the recipient from the credibility determination tendency model management server 32 and stores the credibility determination tendency model 114. The data retention unit 11 requests the graph information management server 34 to create the graph information 111 about the input determination target information. Thereafter, the data retention unit 11 receives the graph information 111 about the determination target information created by the graph information management server 34 and stores the graph information 111. The peculiar graph information generation unit 12 generates peculiar graph information 151 by using the graph information 111, the reliability list 112, and the reliability determination model 113 stored in the data retention unit 11 (step S11).

The credibility determination unit 13 inputs, to the credibility determination tendency model 114, the peculiar graph information 151 generated by the peculiar graph information generation unit 12 (step S12). The credibility determination unit 13 acquires a determination result 152 of credibility output from the credibility determination tendency model 114.

The output unit 14 transmits, to the recipient terminal apparatus 2, the determination result 152 of the credibility acquired from the credibility determination unit 13 (step S13). The output unit 14 transmits, to the recipient terminal apparatus 2, the peculiar graph information 151 generated by the peculiar graph information generation unit 12 (step S14). The recipient terminal apparatus 2 provides, to the recipient P, result information 153 including the peculiar graph information 151 and the determination result 152 of the credibility by displaying the result information 153 on a monitor or the like.

The recipient P confirms the result information 153 and determines the credibility of the determination target information. Thereafter, the recipient P transmits, to the machine learning model update unit 15 of the information processing apparatus 1, the feedback information 20 including the credibility determination result information 21, the virtual evaluation information 22, and the reliability label correction information 23 (step S15).

The machine learning model update unit 15 updates the parameters of the credibility determination tendency model 114 by using the credibility determination result information 21 and the virtual evaluation information 22 included in the feedback information 20 (step S16). The machine learning model update unit 15 updates the parameters of the reliability determination model 113 by using the reliability label correction information 23 included in the feedback information 20 (step S17). At the next time, the information processing apparatus 1 executes the credibility determination processing by using the reliability determination model 113 and the credibility determination tendency model 114 in which the parameters are updated.

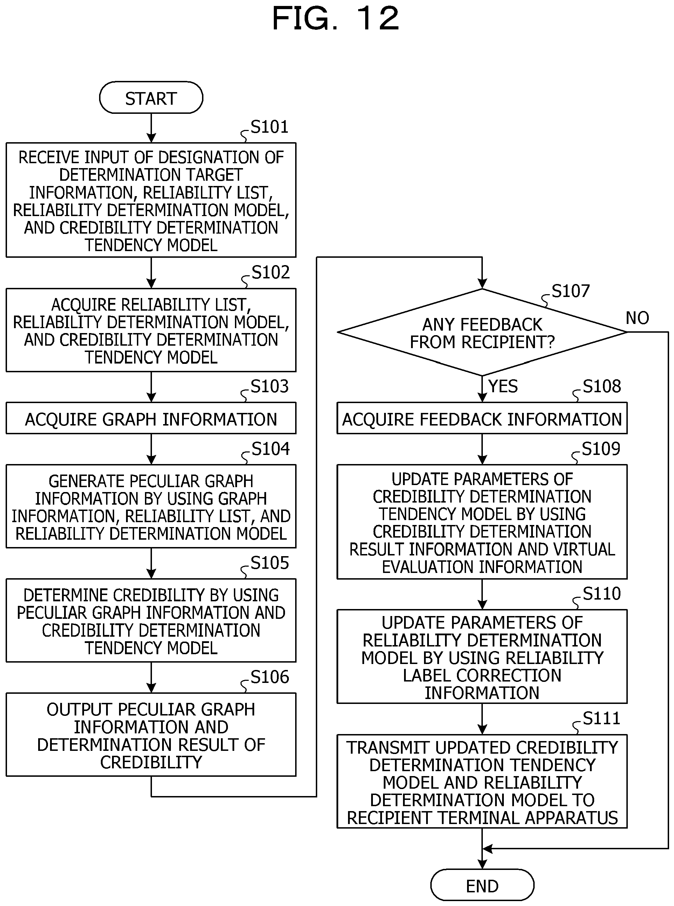

FIG. 12 is a flowchart of the credibility determination processing by the information processing apparatus according to the embodiment. Next, a flow of the credibility determination processing by the information processing apparatus 1 according to the embodiment will be described with reference to FIG. 12.

The data retention unit 11 receives, from the recipient terminal apparatus 2, input of the designation of the determination target information, the reliability list 112, the reliability determination model 113, and the credibility determination tendency model 114 (step S101).

Subsequently, the data retention unit 11 acquires the designated reliability determination model 113, the designated credibility determination tendency model 114, and the designated reliability list 112 respectively from the reliability determination model management server 31, the credibility determination tendency model management server 32, and the reliability list management server 33 (step S102).

The data retention unit 11 requests the graph information management server 34 to create the graph information 111 about the input determination target information. Thereafter, the data retention unit 11 acquires the graph information 111 about the determination target information from the graph information management server 34 (step S103).

The peculiar graph information generation unit 12 generates the peculiar graph information 151 by using the graph information 111, the reliability list 112, and the reliability determination model 113 stored in the data retention unit 11 (step S104).

The credibility determination unit 13 determines the credibility for the determination target information by inputting the peculiar graph information 151 generated by the peculiar graph information generation unit 12 to the credibility determination tendency model 114 and obtaining an output thereof (step S105).

The output unit 14 outputs, to the recipient terminal apparatus 2, the peculiar graph information generated by the peculiar graph information generation unit 12 and the determination result of the credibility acquired from the credibility determination unit 13 (step S106). The recipient P confirms the result information 153 and determines the credibility of the determination target information.

Thereafter, the machine learning model update unit 15 determines whether or not there is feedback from the recipient P (step S107). In a case where there is no feedback (step S107: No), the machine learning model update unit 15 ends the processing.

By contrast, in a case where there is feedback (step S107: Yes), the machine learning model update unit 15 then acquires, from the recipient terminal apparatus 2, the feedback information 20 including the credibility determination result information 21, the virtual evaluation information 22, and the reliability label correction information 23 (in step S108).

The machine learning model update unit 15 updates the parameters of the reliability determination model 113 by using the reliability label correction information 23 included in the feedback information 20 (step S109).

Subsequently, the machine learning model update unit 15 updates the parameters of the credibility determination tendency model 114 by using the credibility determination result information 21 and the virtual evaluation information 22 included in the feedback information 20 (step S110).

Thereafter, the output unit 14 transmits, to the recipient terminal apparatus 2, the reliability determination model 113 and the credibility determination tendency model 114 updated by the machine learning model update unit 15 (step S111).

As described above, the information processing apparatus according to the present embodiment determines the reliability of the property information by each generator indicated in the graph information of the determination target information, by using the reliability list and the reliability determination model, and generates the peculiar graph information by adding the label indicating the reliability to the graph information. The information processing apparatus determines the credibility of the determination target information by using the generated peculiar graph information in the credibility determination tendency model. The recipient may determine the credibility of the determination target information, based on the determination result of the credibility of the determination target information and the peculiar graph information. The information processing apparatus acquires feedback information including information on the result of the determination of the credibility by the recipient, and updates the reliability determination model and the credibility determination tendency model.

Since the reliability determination model performs machine learning by using the determination result of the credibility fed back from the recipient, the reliability determination model may determine the credibility of the property information from each generator in accordance with a determination tendency of the recipient. A label of reliability is assigned to the graph information by using the information of the generator reliable by the recipient and written in the reliability list and the reliability determination model, and thus, it is possible to generate the peculiar graph information representing the reliability according to the determination tendency of the recipient. The credibility of the determination target information is determined by using the peculiar graph information, and thus, it is possible to determine the credibility of the determination target by using the peculiar graph information reflecting reliability of each generator from the recipient's point of view, and it is possible to obtain the determination result of the credibility according to the determination tendency of the recipient. Accordingly, when the recipient is supported in the determination of the credibility of received data with an unknown probability by using the graph information, the determination of the credibility of the data may be supported in consideration of the reliability of the generator from the recipient's point of view. Accordingly, it is possible to appropriately determine the credibility of the received information received from the Internet or the like.

### (Hardware configuration)

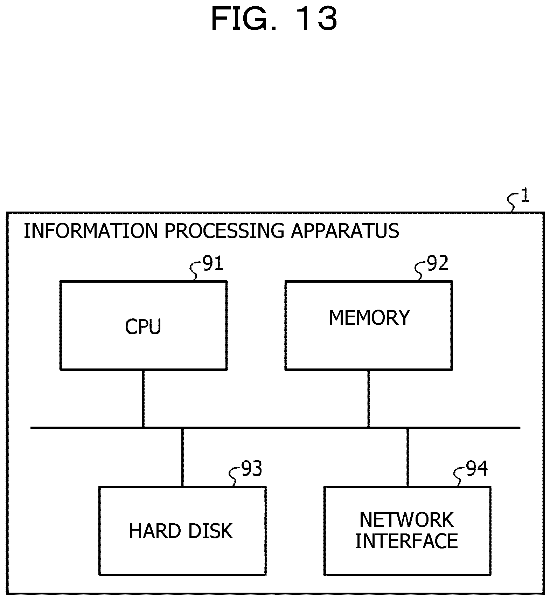

FIG. 13 is a hardware configuration diagram of the information processing apparatus. Next, an example of a hardware configuration for realizing functions of the information processing apparatus 1 is described with reference to FIG. 13.

As illustrated in FIG. 16, for example, the information processing apparatus 1 includes a central processing unit (CPU) 91, a memory 92, a hard disk 93, and a network interface 94. The CPU 91 is coupled to the memory 92, the hard disk 93, and the network interface 94 via a bus.

The network interface 94 is an interface for communication between the information processing apparatus 1 and an external apparatus. For example, the network interface 94 relays communication between the CPU 91 and the recipient terminal apparatus 2, the reliability determination model management server 31, the credibility determination tendency model management server 32, the reliability list management server 33, and the graph information management server 34.

The hard disk 93 is an auxiliary storage device. The hard disk 93 may store the graph information 111, the reliability list 112, the reliability determination model 113, and the credibility determination tendency model 114 illustrated in FIG. 2. The hard disk 93 stores various programs including a program for realizing functions of the data retention unit 11, the peculiar graph information generation unit 12, the credibility determination unit 13, the output unit 14, and the machine learning model update unit 15 illustrated in FIG. 2.

The memory 92 is a main storage device. For example, a dynamic random-access memory (DRAM) may be used as the memory 92.

The CPU 91 reads various programs from the hard disk 93, loads the programs to the memory 92, and executes the programs. Accordingly, the CPU 91 realizes the functions of the data retention unit 11, the peculiar graph information generation unit 12, the credibility determination unit 13, the output unit 14, and the machine learning model update unit 15 illustrated in FIG. 2.

## Claims

1. An information processing program for causing a computer to execute a process, wherein
the computer includes
a trained first machine learning model that receives, as an input, property information which indicates a probability of data and is assigned reliability information which indicates reliability of the property information, and outputs credibility of the data, and
the process comprises:
acquiring first property information that indicates a probability of predetermined data received by a recipient;
generating first reliability information that indicates reliability of the first property information, based on a reliability list in which a generator reliable for the recipient among generators of the first property information is registered; and
inputting, to the first machine learning model, the first property information that is assigned the first reliability information, determining credibility of the predetermined data, and presenting a result.

2. The information processing program according to claim 1, wherein
the acquiring of the first property information is performed by acquiring graph information that represents a relationship among the predetermined data, the first property information, and the generator, and
the first machine learning model is trained by using, as input data, peculiar graph information obtained by adding the first reliability information to the graph information.

3. The information processing program according to claim 2, wherein
the computer further includes
a second machine learning model that is trained based on a past determination result of reliability for second property information by the recipient, and that receives, as inputs, specific property information and information on a generator of the specific property information, and outputs reliability information of the specific property information, and
in the generating of the first reliability information, the first reliability information is generated by inputting, to the second machine learning model, third property information associated with a generator that is not registered in the reliability list among the generators of the first property information and information of a generator of the third property information.

4. The information processing program according to claim 3, further causing the computer to execute a process comprising:
receiving a determination result of the reliability for the first property information by the recipient, and updating the second machine learning model.

5. The information processing program according to claim 1, further causing the computer to execute a process comprising:
receiving a determination result of the credibility for the predetermined data by the recipient, and updating the first machine learning model based on the determination result of the credibility.

6. The information processing program according to claim 5, wherein
the computer is caused to execute the process of updating the first machine learning model by using virtual property information for which reliability is determined to be high by the recipient in addition to the determination result of the credibility.

7. An information processing method comprising:
preparing a trained first machine learning model that receives, as an input, property information which indicates a probability of data and is assigned reliability information which indicates reliability of the property information, and outputs credibility of the data;
acquiring first property information that indicates a probability of predetermined data received by a recipient;
generating first reliability information that indicates reliability of the first property information, based on a reliability list in which a generator reliable for the recipient among generators of the first property information is registered; and
inputting, to the first machine learning model, the first property information that is assigned the first reliability information, determining credibility of the predetermined data, and presenting a result.

8. An information processing apparatus comprising:
a data retention unit configured to acquire first property information that indicates a probability of predetermined data received by a recipient;
a generation unit configured to generate first reliability information that indicates reliability of the first property information, based on a reliability list in which a generator reliable for the recipient among generators of the first property information is registered; and
a credibility determination unit configured to input, to a trained first machine learning model that receives, as an input, property information which indicates a probability of data and is assigned reliability information which indicates reliability of the property information, and outputs credibility of the data, the first property information that is assigned the first reliability information, and determine credibility of the predetermined data, and presenting a result.
